# EUROPEAN PATENT APPLICATION

(11) **EP 4 257 243 A1**
(43) Date of publication of application: **11.10.2023**
(21) Application number: 22166967.4
(22) Date of filing: 06.04.2022
(51) Int. Cl.: B03D 1/02, G06N 20/00, G06Q 50/02

(54) **MINERAL FLOTATION SEPARATION**

(71) Applicant: Cytec Industries, Inc., Princeton, NJ 08540 (US)
(72) Inventor: BAGWE, Rahul, Stamford (US); BHAMBHANI, Tarun, Wilton (US); RENAUD, Nicolas, Jersey City (US); GARNIER, Jean-Paul, Saint Vincent La Chatre (FR); GARCIA, Juan Antonio, Gijón (ES); AILLET, Tristan, Pessac (FR)
(74) Representative: Lederer & Keller Patentanwälte Partnerschaft mbB

(57) **Abstract**

First measurement results are received from a characterization system in an ore processing plant. The first measurement results characterize a sample of mineral flotation feed. A first set of mineral characteristics of the sample of mineral flotation feed are determined based on the first measurement results. Respective similarities are determined between the first set of mineral characteristics and a plurality of predetermined sets of mineral characteristics that are each associated with one or more corresponding sets of flotation treatment parameters. A first set of flotation treatment parameters is selected based on the respective similarities. The first set of flotation treatment parameters is transmitted to a flotation processing system for separation of mineral components according to the first set of flotation treatment parameters.

## Description

### FIELD OF THE DISCLOSURE

The present disclosure relates to froth flotation of ores.

### BACKGROUND

Froth flotation is used to separate components of mineral ore. In a froth flotation process, a slurry of ground ore is agitated in a large tank, target minerals are selectively rendered selectively hydrophobic and/or hydrophilic, and hydrophobic components are attached to bubbles which levitate to the surface and are removed. The efficacy of froth flotation is dependent on, among other factors, the types and amounts of chemicals used to treat the ore, the configuration and duration of processing in the tank, and other parameters.

### SUMMARY

Some aspects of this disclosure describe methods. For example, according to some mineral feed flotation methods, first measurement results are received from a characterization system in an ore processing plant. The first measurement results characterize a sample of mineral flotation feed. A first set of mineral characteristics of the sample of mineral flotation feed are determined based on the first measurement results. Respective similarities are determined between the first set of mineral characteristics and a plurality of predetermined sets of mineral characteristics that are each associated with one or more corresponding sets of flotation treatment parameters. A first set of flotation treatment parameters is selected based on the respective similarities. The first set of flotation treatment parameters is transmitted to a flotation processing system for separation of mineral components according to the first set of flotation treatment parameters.

Implementations of this and other methods can have any one or more of at least the following characteristics.

In any or all implementations, the plurality of predetermined sets of mineral characteristics include a plurality of clusters of characteristics.

In any or all implementations, the method includes receiving a plurality of measurement results characterizing a corresponding plurality of first mineral samples, determining a plurality of first sets of mineral characteristics corresponding to the plurality of measurement results, and clustering the plurality of first sets of mineral characteristics into the plurality of clusters of characteristics.

In any of the foregoing or other implementations, the method includes performing one or more measurement processes on the plurality of first mineral samples, to obtain the plurality of measurement results.

In any or all implementations, determining the plurality of first sets of mineral characteristics includes performing principal component analysis or linear discriminant analysis on the plurality of measurement results.

In any or all implementations, clustering the plurality of first sets of mineral characteristics includes passing the plurality of first sets of mineral characteristics through a decision tree.

In any or all implementations, a rule in the decision tree includes a decision based on a concentration of a first mineral component in the sample.

In any or all implementations, a first cluster of the plurality of clusters includes a first set of mineral characteristics corresponding to a first ore type and a second set of mineral characteristics corresponding to a second ore type that is different from the first ore type.

In any of the foregoing or other implementations, a first cluster of the plurality of clusters includes a first set of mineral characteristics corresponding to a first ore type, and a second cluster of the plurality of clusters includes a second set of mineral characteristics corresponding to the first ore type.

In any or all implementations, determining the respective similarities includes determining that the first set of mineral characteristics falls within a first cluster of characteristics of the plurality of clusters of characteristics. The first set of flotation treatment parameters is a set of flotation treatment parameters corresponding to the first cluster of characteristics.

In any of the foregoing or other implementations, determining the respective similarities includes determining that the first set of mineral characteristics falls outside the plurality of clusters of characteristics. Determining the first set of flotation treatment parameters includes determining a combination of at least two sets of flotation treatment parameters corresponding to at least two clusters of characteristics of the plurality of clusters of characteristics.

In any of the foregoing or other implementations, determining the first set of mineral characteristics based on the first measurement results includes at least one of determining principal components of the first measurement results or performing linear discriminant analysis on the first measurement results.

In any of the foregoing or other implementations, determining the first set of mineral characteristics includes mapping the first measurement results to a parameter space of the plurality of predetermined sets of mineral characteristics.

In any or all implementations, the first measurement results characterize the sample of mineral flotation feed when the sample of mineral flotation feed is in a slurry form.

In any or all implementations, the first sample of mineral flotation feed includes a ball mill cyclone overflow.

In any or all implementations, the first sample of mineral flotation feed includes at least one of a semi-autogenous mill feed, a semi-autogenous mill output, or a ball mill cyclone inlet feed.

In some implementations, the first sample of mineral flotation feed has not been subject to separation in a flotation cell.

In any or all implementations, the first set of flotation treatment parameters includes at least one of: a reagent composition, a collector type, a collector dosage, a collector addition point, a frother type, a frother dosage, a frother addition point, a modifier type, a modifier dose, a modifier addition point, a slurry pH, a residence time, a solids density, or a flotation process flow.

In some implementations, the sample of mineral flotation feed includes a combination of multiple ore types.

In any or all implementations, the first measurement results include at least one of an X-ray diffraction pattern, an X-ray fluorescence spectrum, a near-infrared spectroscopy spectrum, or magnetic resonance intensity at a given frequency.

In any or all implementations, the method includes performing one or more measurement processes on the sample of mineral flotation feed, to obtain the first measurement results.

In any or all implementations, the method includes separating the mineral components according to the first set of flotation treatment parameters.

In any or all implementations, the method includes determining a second plurality of predetermined sets of mineral characteristics by re-clustering the plurality of predetermined sets of mineral characteristics with the first set of mineral characteristics.

In any or all implementations, the method includes obtaining an additional set of mineral characteristics of an additional sample of mineral flotation feed, determining respective additional similarities between the additional set of mineral characteristics and the second plurality of predetermined sets of mineral characteristics, selecting an additional set of flotation treatment parameters based on the respective additional similarities, and transmitting the additional set of flotation treatment parameters to the flotation processing system for separation of mineral components according to the additional set of flotation treatment parameters.

In any of the foregoing or other implementations, this and other mineral feed flotation methods can be implemented as, for example, instructions on a non-transitory, computer-readable storage medium, and/or as instruction on a storage medium in a system including one or more processors.

Implementations according to this disclosure can help to realize one or more advantages. In any or all implementations, mineral extraction recovery and/or grade can be improved. In any or all implementations, process parameters can be customized based on plant state for more efficient and/or cost-effective processing. In any or all implementations, process parameters can be determined in a more timely fashion. In any of the foregoing or other implementations, more relevant process parameters can be determined, e.g., for different ore samples classified as same or different ore types.

This summary may not necessarily list all characteristics and, therefore, subcombinations of these characteristics or elements may also constitute one or more implementations contemplated by the disclosure, the details of which are set forth in the accompanying drawings and the description below. Other aspects, features and advantages will be apparent from the description and drawings, and from the claims.

### BRIEF DESCRIPTION OF THE DRAWINGS

FIG. 1 is a diagram illustrating an example flotation process.
FIG. 2 is a diagram illustrating an example flotation cell.
FIGS. 3A-3B are diagrams illustrating an example flotation process.
FIG. 4A is a diagram illustrating mineral characteristic determination.
FIG. 4B is a diagram illustrating mineral characteristic clustering.
FIG. 4C is an example decision tree.
FIG. 5 is a diagram illustrating examples of ore analysis.
FIG. 6 is a diagram illustrating an example mineral characteristic space.
FIG. 7 is a diagram illustrating an example of data transmission.
FIGS. 8-10 are tables illustrating example experimental data.
FIG. 11 is a diagram illustrating an example method.

### DETAILED DESCRIPTION

This disclosure relates to mineral flotation process customization. During froth flotation, components of mineral ore are selectively separated based on hydrophobicity/hydrophilicity (e.g., differential wettability) in order to extract one or more target minerals. As described herein, mineral flotation feed is characterized at an ore processing plant, and the characterization results are used to determine customized process parameters for froth flotation treatment based on comparison to predefined sets of mineral characteristics. This customization can provide an increase in mineral extraction efficiency, along with other benefits. While multiple implementations of a mineral feed flotation process/method are described throughout the disclosure, it will be understood that any feature described with respect to one aspect or one implementation of a mineral feed flotation process is interchangeable with another aspect or implementation of the process, unless otherwise stated, or such interchangeable feature would otherwise make the process inoperable. Accordingly, any description of a mineral feed flotation process, even though described in relation to a specific implementation or drawing, is applicable to and interchangeable with other implementations or drawings of the methods and processes herein described.

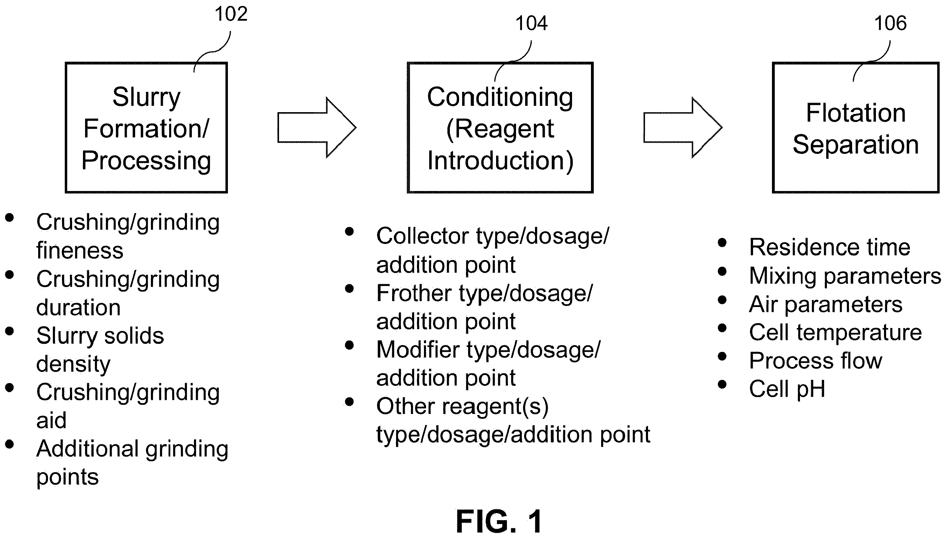

FIG. 1 illustrates several stages of froth flotation processing along with examples of process parameters that can be adjusted to improve mineral extraction performance. During slurry formation/processing 102, ore entering a flotation process (sometimes referred to as "feed" or "flotation feed," terms which can apply to the ore throughout initial ore processing until transfer into a flotation cell) is crushed and ground to form a powder/particulate and is mixed with a solvent (typically water) to form an aqueous slurry. Crushing and grinding, while related processes, are distinct from one another: crushing is typically performed on dry (non-slurried) ore and reduces ore particles to sizes on the order of millimeters, while grinding can be performed on either wet or dry ore, is more impact-based than crushing, and reduces particle sizes to approximately tens to low hundreds of microns. Crushing is often performed external to an ore processing plant, e.g., at a mine using a large crusher that receives input from multiple pits of the mine, and grinding is performed at the ore processing plant prior to flotation separation.

Particle size distribution (e.g., fineness distribution), as determined by, for example, crushing/grinding duration, can be adjusted and may affect subsequent flotation results. For example, larger or heavier particles may be less likely to attach to air bubbles in a flotation cell. The slurry solids density (e.g., density of particulate in the slurry compared to solvent) is another important parameter: a lower density of particles in the slurry can lead to lower froth stability, which can be compensated for by appropriate reagents. Chemical crushing/grinding aids may be added to improve grinding efficiency, the appropriate choice of crushing/grinding aid dependent on parameters (e.g., hardness) of the ore.

The slurry then undergoes conditioning 104, during which one or more reagents are added to the slurry to prepare the slurry for flotation separation. While various types and combinations of reagents can be applied, in general the reagents are classified into three types. "Collector" reagents adsorb selectively to particular minerals within ore to render the minerals hydrophobic, such that the hydrophobic minerals subsequently adhere to bubbles as described in further detail below. Collectors are generally classified into sulfide collectors and non-sulfide collectors, with common examples including xanthate salts (e.g., potassium amyl xanthate, sodium isobutyl xanthate, or sodium isopropyl xanthate), sulfur-based ligands such as dithiophosphates or dithiocarbamates, fatty amines, fatty acids, and carboxylates. Collector type(s) added, collector dose(s), and collector addition point(s) can each modify the efficacy of subsequent flotation treatment.

"Frother" reagents act to promote froth/foam formation during treatment in flotations cells and to stabilize the froths/foams. Examples of frothers include pine oil, some alcohols (e.g., methyl isobutyl carbinol), polyglycols, and ethers thereof. As noted for collectors, frother type(s) added, frother dose(s), and frother addition point(s) can each modify the efficacy of subsequent flotation treatment.

One or more "modifier" reagents may also be added, which may have various effects. One notable modifier class consists of pH modifiers that adjust the pH in flotation cells and/or in slurries themselves, thereby modifying the effects of collectors, e.g., adjusting the selectively of certain collectors with respect to certain minerals. Examples of pH modifiers include calcium hydroxide (Ca(OH)₂), soda ash (Na₂CO₃), caustic soda (NaOH), sulfuric acid (H₂SO₄), and hydrochloric acid (HC1). Other modifiers can be used, e.g., anionic modifiers, such as phosphates, silicates, and carbonates, and organic modifiers such as thickeners (e.g., dextrin, starch, glue, and carboxymethyl cellulose). Similarly to collectors and frothers, modifier type(s) added, modifier dose(s), and modifier addition point(s) can each modify the efficacy of subsequent flotation treatment.

"Addition point," in reference to a reagent, refers to a timing or location of addition of the reagent, e.g., prior to entry into a first flotation cell (e.g., during ore milling/grinding), into a flotation cell itself, after processing in at least one flotation cell and before processing in another flotation cell, at another specified point during flotation processing, or a combination thereof.

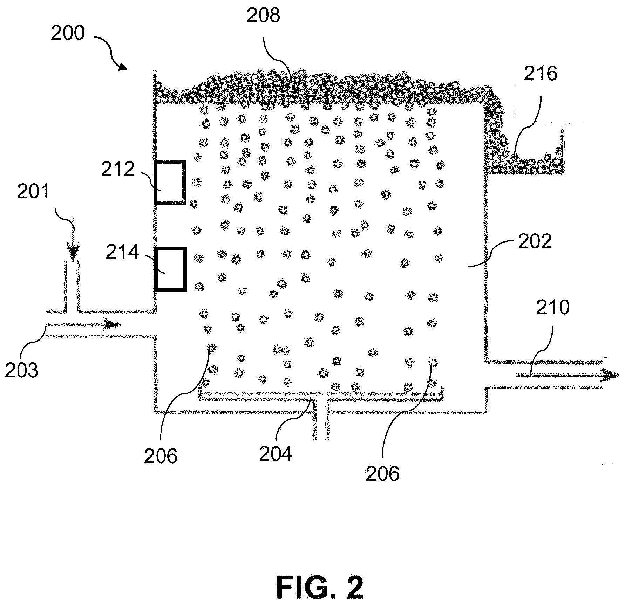

After conditioning, the slurry, including any added reagents, is introduced into a flotation cell for flotation separation 106. As shown in FIG. 2, in an example flotation separation process, a slurry 203 is combined with reagents 201 and pumped into a flotation cell 200 filled with water 202. The water 202 may include reagents, e.g., frothers or modifiers. An air bubble dispersal system 204 introduces air bubbles 206 (e.g., nitrogen bubbles) into the water 202. Hydrophobic minerals components within the water 202, such as minerals that have been rendered hydrophobic by collector reagents or had their existing hydrophobicity enhanced by collector or other reagents, attach to the air bubbles 206 and rise with them to the top of the flotation cell 200, forming a froth 208. This froth 208 is removed from the cell 200, forming a concentrate 216. Components within the water 202 that do not form the froth (e.g., hydrophilic mineral components) are called tailings 210 and are likewise removed from the cell 200. In some implementations, additional features are also present to promote mineral separation, such as a mechanical mixing system 212 and/or temperature regulation system 214.

In practice, overall flotation processing may include multiple stages of separation. For example, either or both of the concentrate 216 and the tailings 210 may be further processed, e.g., by optional further grinding and/or reagent addition followed by introduction into further flotation cells. After "roughing" in a first flotation cell, the produced concentrate 216 is subject to "cleaning" in one or more further flotation cells, each additional stage producing a higher resulting grade of concentrate, e.g., a concentrate with a higher concentration of a target mineral. The tailings 210 are likewise "scavenged" in one or more further flotation cells to recover any of the target mineral that was not separated into the concentrate 216 during roughing. Each additional stage of processing can increase the recovery grade of target minerals.

In some implementations, in addition to analysis of the flotation feed as described throughout this disclosure, the concentrate 216 and/or tail 210 are themselves measured (e.g., by XRD) to determine concentrate and/or tail mineral characteristics, and the concentrate and/or tail mineral characteristics are used to determine flotation process parameters in accordance with this disclosure. For example, the concentrate and/or tail mineral characteristics can be combined with mineral characteristics determined from the flotation feed to obtain overall mineral characteristics for similarity-based process parameter determination.

Among the process parameters associated with flotation separation 106 are residence time within each cell, mixing parameters (e.g., speed or configuration of mechanical mixing), air parameters (e.g., amount or size of bubbles), cell temperature, cell pH, and the general process flow of the flotation separation 106, such as the overall number of stages, the number of cleaning/scavenging stages, concentration redirection to different parts of the flotation processing plant, cell activation/de-activation, and/or other parameters.

The goal of flotation processing is to improve plant performance, e.g., to extract, from a given portion of ore/feed, as much of a target mineral as possible, while minimizing contamination of the target mineral with other, undesired components within the ore, at an acceptable cost. The process efficiency is determined by the parameters of the flotation processing, such as the slurry processing parameters of slurry formation 102, the reagent parameters of conditioning 104, and the flotation separation parameters of flotation separation 106, as shown in FIG. 1. The optimal choice of these parameters is, in turn, determined at least by the nature of the ore being processed. Each different combination of minerals in the ore, each different set of relative concentrations of those minerals, and each different target mineral in the ore will correspond to a different parameter set.

However, in general, the mineral makeup of flotation feed is not known when flotation processing begins, e.g., when ore from a mine is initially crushed, ground, treated, and/or separated. Ore mined from a given mining operation is not compositionally homogenous but, rather, will have varying makeup depending on, for example, the pit from which the ore was mined, the specific area within the pit, and the depth within the pit. This variance can be characterized to some extent, but rough data will not capture local variations. Moreover, ore mined from different areas of a mine is often mixed together when being crushed and/or when entering an ore processing plant, in combinations that can be difficult to predict or determine. Therefore, while ore processing plant managers may attempt to optimize process parameters based on predicted ore composition or based on a general knowledge of where the ore was mined, the results are often poor. For example, in typical practice, a reagent chemistry may be determined for the next six months of flotation processing based on knowledge of pits to be preferentially mined during those six months. This reagent chemistry may provide acceptable results, but it will not be optimized for the day-to-day or hour-to-hour variations in ore to be processed.

This disclosure describes flotation processes that incorporate measurements of flotation feed to determine flotation process parameters based on comparisons of determined mineral characteristics to predetermined sets/clusters of mineral characteristics, improving process performance

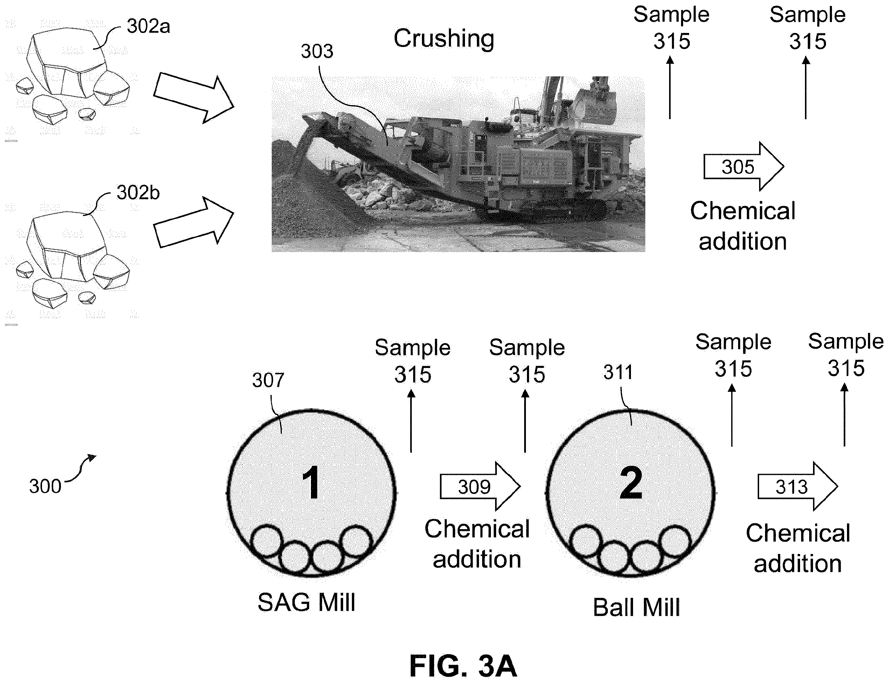

FIGS. 3A-3B show an example flotation process 300 that incorporates flotation feed measurements for parameter determination. The flotation feed can be sampled (e.g., a small, representational quantity extracted) for measurement at one or more of various points during the example flotation process 300, as described below.

One or more portions of ore 302a, 302b are crushed by a crusher 303. The ore 302a, 302b is crushed and mixed together to produce crusher output with contributions from both portions of ore 302a, 302b. As described above, the crusher output may have particle sizes on the millimeter scale, for example. Optionally, one or more chemicals such as grinding aids, reagents, and solvents (e.g., water) may be added to the crusher output (305) to produce SAG (semi-autogenous grinding) mill input (a slurry) that is ground in a SAG mill 307 to produce SAG mill output. Alternatively, the SAG mill input may be dry. Optionally, one or more chemicals such grinding aids, reagents, and solvents may be added to the SAG mill output (309) to produce ball mill input that is ground in a ball mill 311 to produce ball mill output. Optionally, one or more chemicals such as grinding aids, reagents, and solvents may be added to the ball mill output (313) to produce cell input. Although the addition of chemicals at any one of the indicated process points 305, 309, 313 is optional, the cell input itself is a slurry that includes added chemicals. Chemicals may instead or additionally be added during crushing or grinding itself.

Both the SAG mill 307 and the ball mill 311 grind particles using balls (e.g., metal and/or ceramic balls) in a rotating cylinder. The friction and impact of the balls on the particles, as the balls and particles are together lifted and dropped repeatedly by rotation of the cylinder, grind the particles into progressively smaller sizes. Typically, ball mills have higher ball charges (proportion of volume filled by the grinding balls) than SAG mills, and accordingly ball mills generally produce more finely-ground particles than do SAG mills. Note that the combination of two mills shown in FIG. 3A is an example according to some implementations; in other implementations, only one grinding mill may be used, or more than two grinding mills may be used, and the type(s) of grinding mills may also be different.

During this process 300, the flotation feed can be sampled at any one or more of the illustrated sampling points 315. Specifically, in this example, any one or more of the crusher output, the SAG mill input, the SAG mill output, the ball mill input, the ball mill output, or the cell input may be sampled, and the sampling may occur before and/or after a slurry is formed. When ball mill output is sampled, the sample may be taken from the "overflow" of the ball mill, that is, the finely-ground output that proceeds for further processing, as opposed to the "underflow" that undergoes further grinding.

In some implementations, it is desirable to sample the slurry when the slurry is more similar (e.g., compositionally and/or morphologically) to what will be fed to flotation cells, so that measurements of the sample are more reflective of the material to be processed and, therefore, can be used to determine more effective process parameters for flotation separation. For this reason, in some implementations the cell input and/or ball mill output are sampled. However, it can also be desirable to sample the flotation feed earlier in the process, so that process parameters can be derived more quickly and, therefore, can be used to process flotation feed that is more similar to the sampled flotation feed. For this reason, in some implementations, the ball mill input, the SAG mill output, the SAG mill input, and/or the crusher output are sampled.

In some implementations, the portions of ore 302a, 302b have been mined at different mine locations or from different mines and therefore have different compositions. It is unlikely that either of these compositions will be known exactly. Even if approximate data exists to characterize ore composition at a given mine or at a given location in a mine, this data is unlikely to account for real-world compositional variations. In addition, even if the composition of both ore 302a and ore 302b is known, a typical ore processing plant handles many tons of ore per day, often from disparate sources, and ore from different sources may be combined in an unsystematic way, such that the particular ore combination being processed at any given moment is unlikely to be known. In the absence of direct compositional knowledge of flotation feed composition, flotation process parameters are based on estimates, e.g., estimates reflective of an average ore composition in a mine.

These estimates may be based on one or more "ore types," an ore type being an ore composition that is considered to be representative of or characteristic of a species of ore, e.g., a species of ore known to be found in a given mine (e.g., in a given area of a pit of a mine). However, ore types are archetypical rather than directly descriptive of the ore present in feed/slurry at any given time (which may be a mixture of ore types or not described well by a combination of known ore types, such as not well described by a weighted average of known ore types). Classification into ore types may be irrelevant or of little use for determining effective process parameters, for example, because ore types as currently and typically defined may not correspond to clusters of mineral characteristics, and/or, for example, because the parameters by which ore types are currently and typically defined are not the most relevant parameters for differentiating mineral characteristics in a mineral characteristic space. Determination of process parameters based on ore types is at best an inflexible and sub-optimal approach. The use of mineral characteristic similarities can, by comparison, allow for more flexibility and higher flotation recovery, grade, and/or performance.

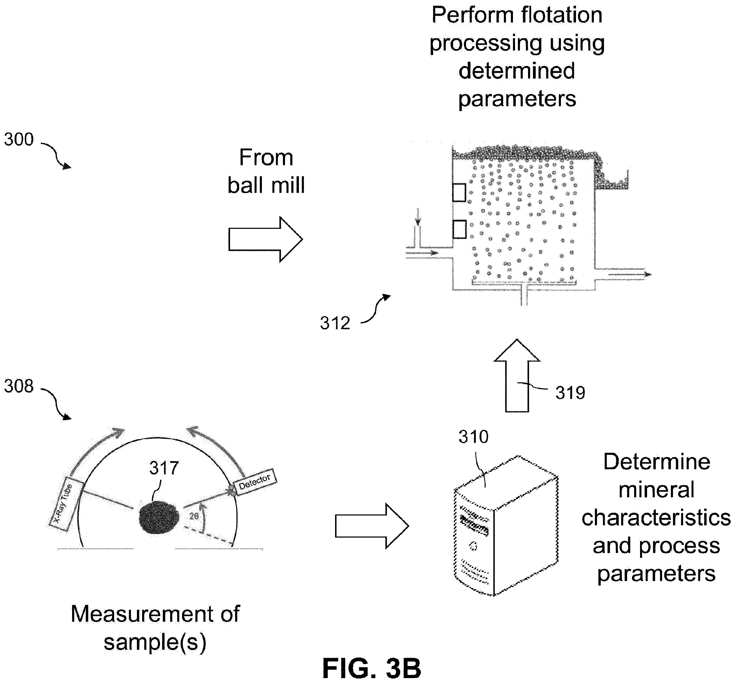

To allow for improved flotation process parameter determination in the example process 300, the one or more samples 317 of the flotation feed are subject to one or more measurement processes 308, as shown in FIG. 3B. Examples of measurement types that may be used include: X-ray diffraction (XRD) to obtain composition and phase information about mineral components in the measured samples 317 (based on an X-ray diffraction pattern); near-infrared spectroscopy (NIR) to identify mineral types (based on a near-infrared spectroscopy spectrum); energy-dispersive X-ray spectroscopy using a scanning electron microscope (SEM-EDX) for elemental surface analysis (based on an intensity-energy spectrum); and X-ray fluorescence spectroscopy (XRF) and/or magnetic resonance analysis for both bulk and trace composition information (based on an X-ray fluorescence spectrum or frequency-dependent magnetic resonance intensity, respectively).

Measurement results are then analyzed by a computer system 310 to determine flotation process parameters 319. The flotation process parameters 319 are sent to a flotation processing system 312 that performs froth flotation processing based on the flotation process parameters 319. The flotation process parameters 319 may instead or additionally be transmitted to systems that are used earlier in the process 300, such as the crusher 303, the mills 307, 311, and/or chemical dispensing tools that form the slurry or dispense other reagents. As described throughout this disclosure, the use of process parameters that are more optimized for the particular composition of the flotation feed is likely to lead to improved process efficiency. Because of delays associated with sample extraction, sample measurement, parameter determination, parameter transmission, and/or process reconfiguration, the flotation feed that is processed according to the determined process parameters may not be identical to the flotation feed that is sampled, e.g., may be flotation feed that arrives at the ore processing plant tens of minutes after the sampled flotation feed. However, the processed flotation feed is likely to be similar to the sampled flotation feed, such that the determined process parameters are likely to be effective.

Various methods can be used to determine the process parameters based on the measurement results obtained from measuring the one or more samples 317. In some implementations, a clustering approach is used. Measurement results of the samples 317 are processed to obtain mineral characteristics, and the measurement results are compared to clustered sets of other measurements results that correspond to predetermined process parameters. Optimal parameters specific to the samples 317 are determined based on this comparison.

The computer system 310 may be a local computer system, e.g., a computer system located at the ore processing plant; a remote computer system such as one or more remote servers (e.g., cloud computing servers) configured to communicate with equipment at the ore processing plant over the Internet or another network connection; or both local and remote. For example, some data processing and/or analysis operations may be performed locally, and the results of these operations may be transmitted to a remote computer system for further processing. Flotation process parameters determined at the remote computer system may be transmitted back to the local computer system for operational implementation.

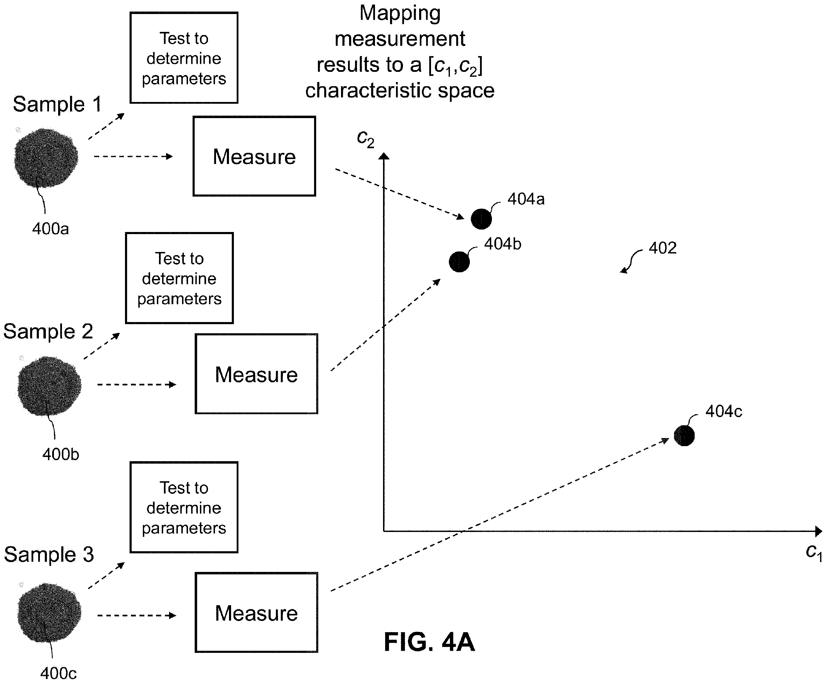

Optimal parameter determination is based on pre-processed prior sample data that has been analyzed and clustered at least partly prior to processing of the one or more portions of ore 302a, 302b. As shown in FIG. 4A, multiple prior ore samples 400a, 400b, 400c are measured, e.g., measured using the one or more measurement processes 308 to which the samples 317 are subject as described in reference to FIG. 3B. For example, each prior ore sample 400a, 400b, 400c may be a core sampled from a distinct location in a mine pit, from different pits in a given mine, and/or from different mines. In some implementations, each prior ore sample 400a, 400b, 400c is known to correspond to a characteristic ore type found in a mine. The prior ore samples 400a, 400b, 400c need not correspond to particular ore types, mined locations, or other systematic characteristics, but a diverse set of prior ore samples 400a, 400b, 400c may lead to improved coverage of mineral characteristic spaces and improved differentiation of different sets of mineral characteristics. The prior ore samples 400a, 400b, 400c may be in states matching those in which flotation feed will be subsequently sampled. For example, if flotation feed will, for flotation process parameter determination, be sampled in slurry form as ball mill output, the prior ore samples 400a, 400b, 400c can be correspondingly sampled in slurry form as ball mill output.

In some implementations, each prior ore sample 400a, 400b, 400c is also tested in various flotation processes, with various flotation process parameters, to determine optimal flotation process parameters for each prior ore sample 400a, 400b, 400c. Testing may involve laboratory separation tests conducted on each prior ore sample 400a, 400b, 400c for a number of different experimental conditions.

Measurement results for each prior ore sample 400a, 400b, 400c are processed to obtain mineral characteristics derived from the measurement results. This process represents a mapping from measurement data (e.g., in the case of XRD, an X-ray diffraction pattern, and/or, in the case of near-infrared spectroscopy, a near-infrared spectroscopy spectrum) to a mineral characteristic space 402.

In some implementations, mineral characteristic determination includes specialized, physics-based analyses of the measurement results. For example, XRD data may be analyzed by a Rietveld method or a comparable method to obtain peak parameters, e.g., peak locations and full-width half-maxima. These peak parameters can be used directly as mineral characteristics (e.g., mineral characteristics to be clustered or otherwise sorted or analyzed), and/or the peak parameters can be compared to libraries of known peak parameters to determine mineral characteristics such as mineral types and concentrations.

In some implementations, mineral characteristic determination includes statistical, machine-learning-based, or other analyses of raw measurement data. A representative example of such methods is principal component analysis (PCA), which can be applied to measurement results (either as raw, as-obtained measurement data or after further processing, e.g., Rietveld processing) to obtain principal component values. For example, in the mineral characteristic space 402, *c*₁ and *c*₂ may represent principal components extracted from measurement data of each prior ore sample 400a, 400b, 400c. PCA maps the measurement results to corresponding points 404a, 404b, 404c in the mineral characteristic space 402 so as to emphasize variance between data points along the axes *c*₁ and *c*₂. Although the example mineral characteristic space 402 has two axes, in various implementations three, four, or more than four-dimensional decomposition may be used.

In some implementations, the mineral characteristics include information about a state of the flotation processing plant at a time of processing. For example, the mineral characteristics can include states of tanks/processing stages (e.g., a number and/or capacity of available tanks/stages), a current throughput of feed through the plant, a circulating load value (e.g., a ratio of an amount of solids going through a mill divided by an amount of solids going through a processing circuit), availability/usage of one or more resources consumed for flotation processing (e.g., water balance and/or reagent quantities), and/or how full various sumps of the flotation processing plant are.

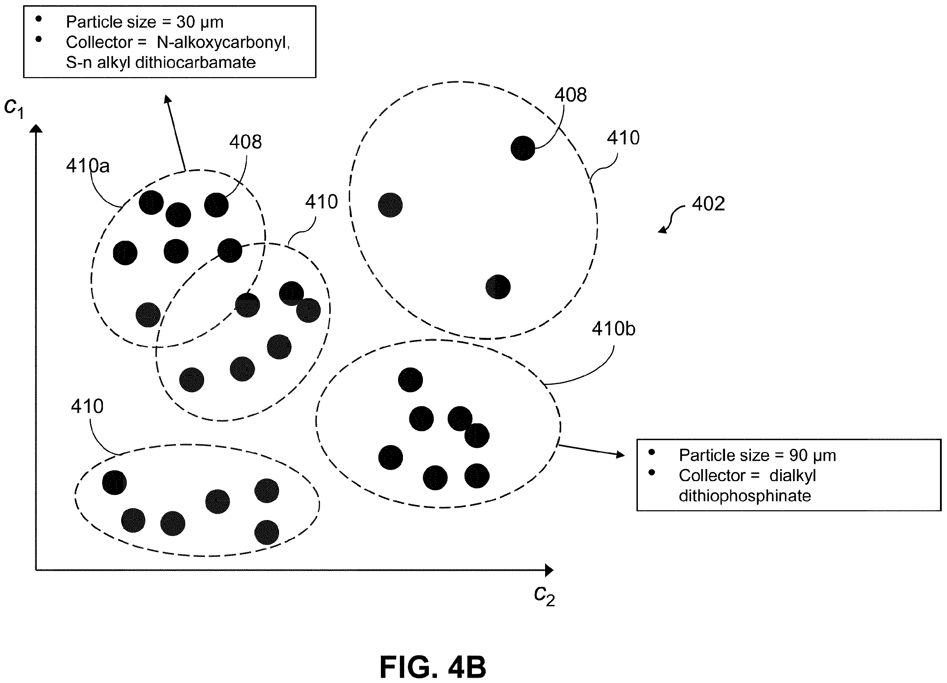

Following mineral characteristic determination, the mineral characteristics are clustered. As shown in FIG. 4B, points (e.g., points 408) in the mineral characteristic space 402 are analyzed using one or more clustering methods to determine clusters 410 into which the points are classified. Various clustering methods may be used, including k-means clustering, density-based clustering, Gaussian mixture-based clustering, hierarchical clustering, or another clustering method.

Each cluster 410 is assigned one or more corresponding sets of flotation process parameters according to which ore assigned to that cluster 410 should be processed. For example, as shown in FIG. 4B, a first cluster 410a is to be ground to a particle size of 30 µm and treated with N-alkoxycarbonyl, S-n alkyl dithiocarbamate as a collector reagent, while another cluster 410b is to be ground to a particle size of 90 µm and treated with dialkyl dithiophosphinate as a collector reagent.

Assignment of flotation process parameters to clusters 410 can be performed in various ways. In some implementations, optimal flotation process parameters have been previously determined for a point in each cluster 410, and those optimal flotation process parameters are used directly for the entire cluster 410. In some implementations, different optimal flotation process parameters have been previously determined for multiple points in each cluster 410, and the different optimal flotation process parameters are combined (e.g., averaged or otherwise combined in a weighted combination) to determine process parameters for the entire cluster 410. In some implementations, optimal flotation process parameters may not be known in advance for points in some or all of the clusters 410, and flotation process parameters assigned to the clusters 410 can be determined in one or more other ways, e.g., based on literature values or known best practices.

In some implementations, linear discriminant analysis (LDA) is used instead of or in addition to PCA. LDA may be used in a supervised analysis to improve dimensionality reduction (e.g., mapping of measurement results to mineral characteristics) and/or to improve clustering (e.g., mapping of mineral characteristic to established clusters). Supervised training using LDA can be based on previously-obtained data, such as recovery rates.

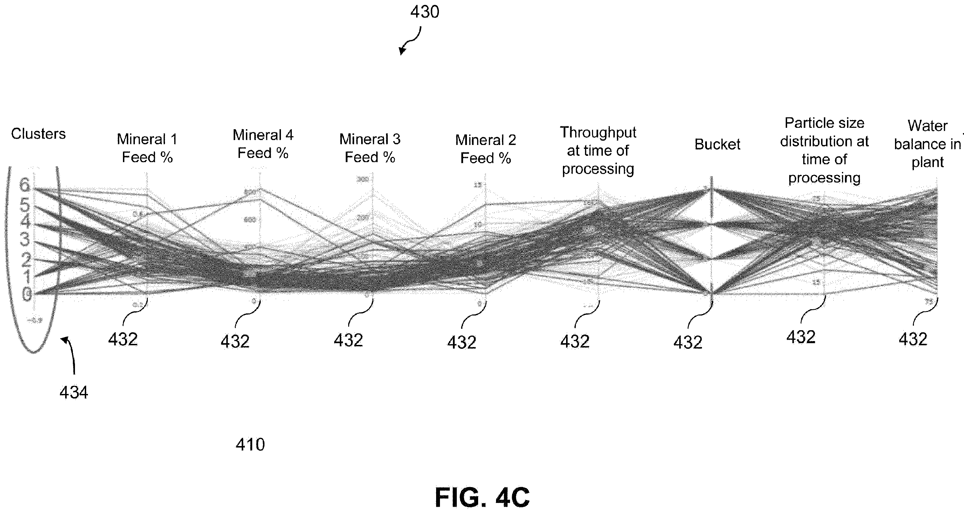

In some implementations, cluster identification and assignment is performed by a decision tree method. As shown in FIG. 4C, an example clustering decision tree 430 includes decision nodes 432. The decision nodes 432 represent decisions based on measurement results and/or mineral characteristics of the prior ore samples. In the example decision tree 430, the mineral characteristics include, a concentration level of a mineral or element in the feed, throughput at the time of processing, particle size distribution of the feed at the time of processing, and states of the flotation processing plant (e.g. circulating loads, water balance, sump usage, etc.). For example, a first decision may depend on a concentration of copper, a second decision may depend on a concentration of arsenic, and a third decision may depend on a concentration of antimony.

The decision tree 430 can be generated using a decision tree classification model, in some implementations based on known mineral recovery rates and/or other results of flotation processing, such as output purity. For example, a regression model (e.g., incorporating a random forest approach) may be used to identify aspects of measurement results that are most critical for recovery outcomes. Buckets are prepared (e.g., low, medium, and high recovery buckets), and decision tree node parameters (splittings) are determined using a visual and/or algorithmic approach, such as based on purity tests (e.g., Gini impurity tests) where the objective is to split the original dataset of all ore samples into subsets having high purities. Mineral characteristics corresponding to the prior ore samples 400a, 400b, 400c are used to train/generate the clustering decision tree 430, and the trained clustering decision tree 430 is subsequently applied to new flotation feed samples to determine flotation processing parameters.

Other mineral characteristics may instead or additionally be used as bases on which to sort ore samples in the decision tree. For example, in some implementations, PCA, LDA, and/or another statistical method is used to identify mineral characteristics of the ore samples (e.g., principal components), and the statistically-determined mineral characteristics are used to sort the ore samples in the decision tree 430.

As a result of the series of decision nodes 432, the prior ore samples are sorted into clusters 434, e.g., cluster 0, 1, 2, 3, 4, 5, or 6. Each cluster 434 is assigned one or more corresponding sets of flotation process parameters (e.g., as described above in reference to FIG. 4B).

It is noteworthy that the clusters need not (but, in some implementations, may) correspond to known, previously-defined ore types. Two ore samples that are thought to be of the same ore type (e.g., based on mined location and/or analyses different from analyses used to sort ore samples into the clusters) may be grouped into different clusters corresponding to different flotation process parameters. Different flotation process parameters are therefore determined for the two ore samples, allowing them to be processed more efficiently than if one set of flotation process parameters applied to both samples.

Correspondingly, in some cases, ore processed at two different times corresponding to two different ore types may be grouped into the same cluster, e.g., based on recognition of previously-deemphasized similarities in composition or another characteristics. The ore processed at the two different times can correspondingly be processed using the same or similar flotation process parameters that are configured to be optimized for the ore, improving process efficiency. An analysis that took into account only ore type might process the ore more differently at the two different times, leading to worse process efficiency for some or all of the ore.

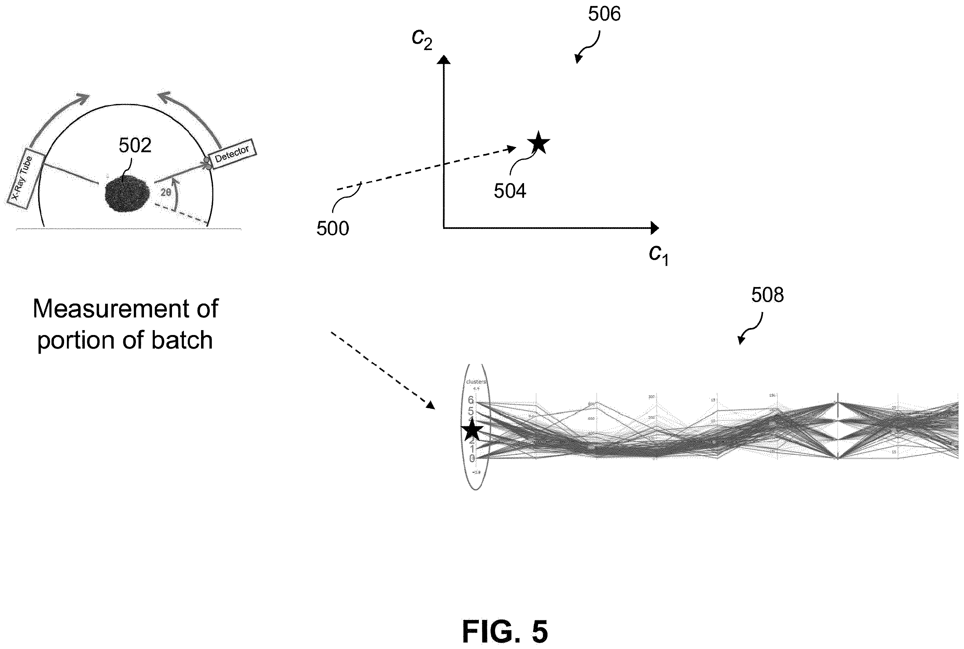

As shown in FIG. 5, to implement similarity-based flotation process parameter determination, measurement results 500 of one or more samples 502 of flotation feed are analyzed to determine corresponding mineral characteristics 504 of the flotation feed. When multiple samples 502 are analyzed, the samples 502 can be extracted such that they are representative of the same general portion of flotation feed at different points in the portion of flotation feed's process flow, e.g., both before grinding and after grinding. Different measurement results may be exploited from different samples. For example, a first sample may be measured by XRD and a second sample may be measured by NIR, the first sample and second sample extracted from flotation feed at different points in the flotation process when the flotation feed is in two respective states that are respectively more suitable for XRD study and NIR study. Both the XRD data and NIR data are then used to determine mineral characteristics of the flotation feed and to identify a similar, pre-determined set of mineral characteristics.

As described in reference to FIGS. 4A-4C, determination of the mineral characteristics may include physics-based analyses such as XRD peak fitting and determination of mineral concentrations, statistical analyses such as PCA and/or LDA, or other methods. The determined mineral characteristics can be visualized in a mineral characteristic space 506, e.g., a space of principle components or discriminants. The mineral characteristics can instead or additionally be analyzed using a decision tree 508, e.g., the decision tree 430 previously used to sort ore samples into clusters. If a decision tree approach is used, the mineral characteristics are directly sorted into one of the previously-defined clusters. This decision tree sorting is based on similarities of the mineral characteristics of the current flotation feed sample compared to mineral characteristics of the prior, previously-classified ore samples, because the current mineral characteristics will tend to be sorted into a cluster with similar mineral characteristics.

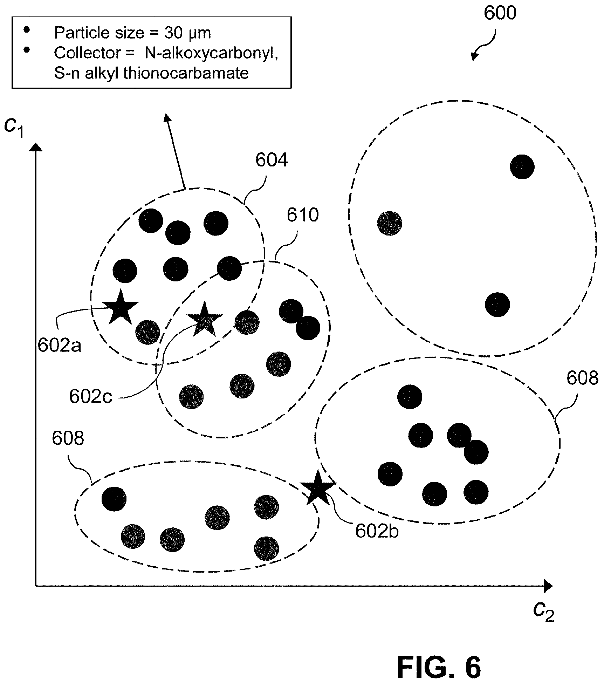

As shown in FIG. 6, as mapped onto a mineral characteristic space 600, mineral characteristics 602a, 602b, 602c representing sample(s) of different portions of flotation feed are compared to clustered mineral characteristics of previously-analyzed ore samples. For example, first mineral characteristics 602a of a portion of flotation feed are determined to fall within a first cluster 604, while second mineral characteristics 602b are determined to fall outside the pre-existing clusters.

In some implementations, when mineral characteristics of a flotation feed sample fall within a particular cluster, the previously-defined flotation process parameters assigned to that cluster are directly identified and used to process further flotation feed. For example, in response to identification of the first cluster 604, process parameters can be altered so that subsequent flotation feed is ground to a particle size of 30 µm and treated with N-alkoxycarbonyl, S-n alkyl thionocarbamate as a collector reagent. The subsequent flotation feed may be, for example, feed that enters an ore processing plant soon after (e.g., 10 minutes after, 30 minutes after, or one hour after) the flotation feed from which one or more samples were extracted to obtain the mineral characteristics 602a.

In some implementations, the previously-defined flotation process parameters assigned to the corresponding cluster are modified to obtain further-customized process parameters. For example, relative similarities of the mineral characteristics of the sample(s) to mineral characteristics of prior ore samples assigned to the cluster may be determined, and the previously-defined flotation process parameters for the cluster can be modified to more closely match predetermined optimal parameters for the most similar prior ore sample, rather than merely exactly matching the previously-defined flotation process parameters defined broadly for the entirely cluster.

In some cases, mineral characteristics corresponding to flotation feed do not fall neatly into any particular predefined cluster. For example, as shown in FIG. 6, mineral characteristics 602b fall between cluster 606 and cluster 608. In such cases, flotation process parameters can be obtained by interpolation (e.g., linear interpolation) between the respective sets of flotation process parameters predefined for the clusters 606 and 608. For example, if cluster 606 is associated with frother A and cluster 608 is associated with frother B, a chemical dispensing system can be configured to provide a mix of frothers A and B. In some implementations, the flotation process parameters can be customized (e.g., weighted) based on respective similarities of the mineral characteristics 602b to the clusters 606, 608. For example, if mineral characteristics 602b are closer to cluster 606 than to cluster 608, subsequent flotation feed can be processed using a customized frother mixture that includes more of frother A than frother B. Similar reasoning can be applied to determine other customized reagents, customized pH levels (e.g., a pH level falling between respective pH levels for clusters 606, 608), and other customized flotation process parameters.

If new ore samples are determined to not fall within an existing cluster, clustering may be re-performed using mineral characteristics of the new ore samples as part of the clustering process (e.g., as input data to the PCA analysis, LDA analysis, and/or decision-tree generation process, and corresponding cluster generation), so that future ore having the same mineral characteristics as, or similar mineral characteristics to, the new ore samples will be grouped into a cluster with the new ore samples and processed appropriately. The effectiveness of mineral characteristic sorting can therefore be improved over time. In some implementations, experiments may be conducted to identify optimal flotation process parameters for processing the new ore samples.

In some implementations, a cluster is assigned multiple sets of flotation process parameters. These multiple sets may correspond to different operating states of an ore processing plant that can necessitate or suggest different treatment types. For example, a cluster may be associated with two sets of flotation process parameters that include at least partly different reagents, process flows, etc. If the ore processing plant has low supplies of a given reagent, a set of flotation process parameters that does not include that reagent can be selected. If a high throughput is desired, a set of flotation process parameters that will process the flotation feed more quickly (e.g., by an altered process flow) can be selected. By association of multiple sets of flotation process parameters with clusters of mineral characteristics, process flexibility can be improved.

In some cases, the result of the aforementioned analysis will be that a "default" set of flotation process parameters are selected. For example, if mineral characteristics do not fall into a cluster (e.g., as described for mineral characteristics 602b), the system may revert to a default set of flotation process parameters that are reasonably effective at treating different types of mineral samples. Default flotation process parameters may be set equipment-side, so that, for example, an analyzing computer system (such as the computer system 310) may transmit not the default process parameter set itself but, rather, an instruction for flotation processing equipment to proceed with the equipment's locally-stored default operations. In some implementations, the default flotation process parameters are stored at and transmitted by the analyzing computer system. Default flotation process parameters may instead or additionally be associated with one or more clusters of mineral characteristics, so that, if a newly-analyzed sample is determined to fall within one of those clusters, an instruction is sent for flotation processing equipment to use default process parameters.

In some cases, mineral characteristics of an extracted ore sample correspond to two or more predefined clusters. For example, as shown in FIG. 6, mineral characteristics 602c are in a region of the mineral characteristic space 600 assigned to both the first cluster 604 and a second cluster 610. In such cases, flotation process parameters can be obtained by combination of the respective sets of flotation process parameters predefined for the two or more predefined clusters, e.g., clusters 604 and 610. In some implementations, the combination is an equal combination of the respective sets of flotation process parameters. In some implementations, the combination is a customized (e.g., weighted) combination based on respective similarities of the mineral characteristics 602c to the clusters 604, 610. For example, although the mineral characteristics 602c fall within both clusters 604, 610, the mineral characteristics 602c may be closer to a center of a first region associated with the first cluster 604 than to a center of a second region associated with the second cluster 610. This may correspond to better matching with the first cluster 604 than with the second cluster 610 and, accordingly, to flotation process parameters that are closer to those of the first cluster 604 than to those of the second cluster, while still at least partially being based on (e.g., being a combination based partially on) flotation process parameters of the second cluster 610.

Flotation process parameters are provided to a flotation processing system for treatment of flotation feed characterized by the measurement-derived mineral characteristics. In some implementations, the process parameters are provided to a user terminal (e.g., a personal computer, a mobile device, a kiosk, or an application-specific user interface system) for review by a flotation processing system operator. The operator can configure the flotation processing system in accordance with the flotation process parameters. In some implementations, the operator makes decisions in a "validation" phase in which the process parameters appear on the user terminal as a recommendation. The operator is permitted to either agree with the recommendation or overrule the recommendation and substitute the operator's own selected process parameters. In some implementations, a machine learning model is trained using these operator decisions as training data. The training data can include one or more of process conditions (e.g., a state of the ore processing plant), information about the flotation feed (e.g., measurement results and/or mineral characteristics), mineral characteristics similarity information (e.g., one or more clusters in which the mineral characteristics are grouped), one or more sets of flotation process parameters recommended by the similarity-based analysis, and/or other data. The training data is labeled with the operator validation decisions. A machine learning model trained in this way can be used to recommend future operator decisions and, eventually, fully supplant the operator.

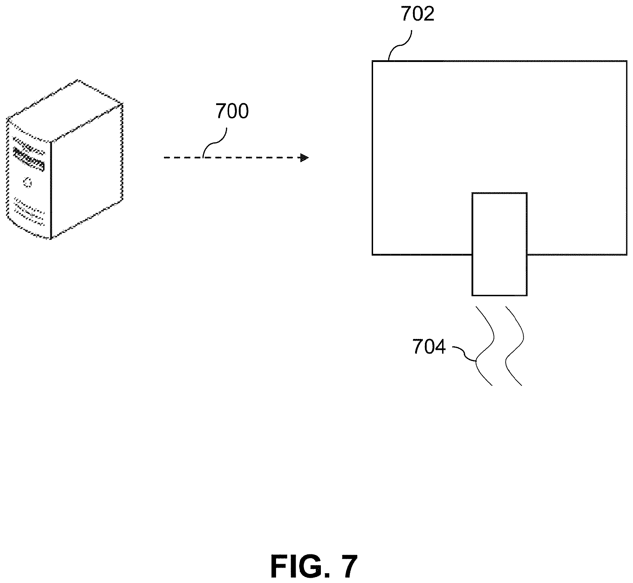

In some implementations, at least some of the flotation process parameters are transmitted to an automatic processing system that automatically acts in accordance with the flotation process parameters. For example, as shown in FIG. 7, a determined reagent chemistry 700 is transmitted to a chemical provision system 702. In response, the chemical provision system 702 dispenses one or more reagents 704 (e.g., a collector, a pH modifier, and/or another reagent) in accordance with the determined reagent chemistry 700. In some implementations, to produce the reagents 704, the chemical provision system 702 mixes together one or more stored chemicals. For example, if the one or more reagents 704 include a customized reagent that does not correspond exactly to a stored reagent, the chemical provision system 702 may produce an appropriate mix of the stored reagents to create the customized reagent. In some implementations, the customized reagent is determined based on the mineral characteristics of ore sample not falling into a cluster, falling into multiple clusters, being modified based on position within a cluster, or for another reason.

Other flotation processing systems may instead or additionally receive flotation process parameters to guide operations during flotation processing. Grinding and crushing mills, flotation cells and associated systems/mechanisms, and plumbing systems (e.g., valves) are examples of industrial systems that may automatically adjust their operational behavior based on received flotation process parameters and/or that may be adjusted by a tool operator based on the flotation process parameters.

In some implementations, the determined reagent chemistry 700 is based on an identification of one or more problematic minerals in the flotation feed. Non-value species can interfere with flotation, resulting in lower-grade product. The deleterious effects of the non-value species can be controlled by the addition of special reagents to target the non-value species and compensate for their inclusion. One or more clusters can be associated with one or more problematic minerals and, correspondingly, associated with flotation process parameters to compensate for the one or more problematic minerals.

In some implementations, a feedback system is incorporated to change future flotation process parameter determination based on present results. For example, if it determined that extraction efficiency is low using flotation process parameters associated with a given cluster (e.g., based on a low flotation yield), then the flotation process parameters associated with the cluster can be adjusted, and/or the cluster can be split into multiple clusters or combined with another existing cluster. New clusters can be created when it is determined that existing clusters do not correlate well with certain sets of mineral characteristics. Models (such as clustering models and decision tree models) can be provided with an active learning functionality to adjust over time and provide more accurate clustering and more beneficial process parameter correlation. Data obtained from analyzing and processing new flotation feed samples (e.g., mineral characteristics of the new flotation feed samples, and/or results of performing flotation separation on the new flotation feed samples) can serve as input data for revising a set of identified clusters, decision nodes in a decision tree, and other models used for future flotation process parameter determination.

The result of this flotation process parameter determination based on comparisons of mineral characteristics to predetermined clusters of mineral characteristics can be a highly responsive and customizable flotation separation process. Live flotation feed measurements are used to determine suitable collector types, dosages, and addition points; frother types, dosages, and addition points; modifier types and addition points; slurry pH at various points in the plant; and/or other parameters, these parameters then directly being used for treatment of the flotation feed. In some cases, the overall process flow can itself be determined, e.g., disabling a bank of flotation cells for clusters that are associated with faster floating. Adjustments can be made in real time or near real time, e.g., at intervals of less than two hours, less than one hour, less than thirty minutes, or more often.

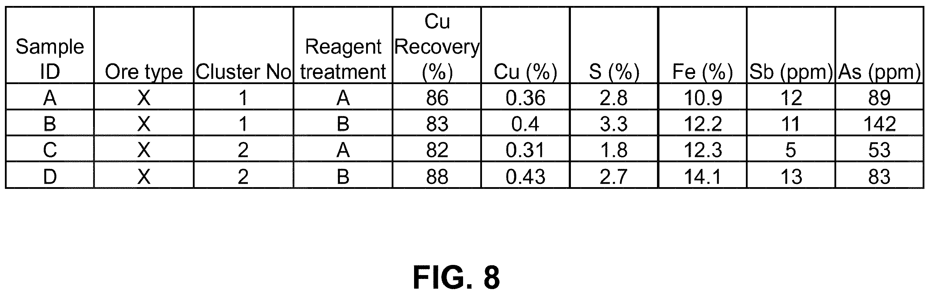

FIG. 8 shows an example of mineral extraction efficiency improvements resulting from cluster-based flotation process parameter determination. Four ore samples A, B, C, and D were mined at a mine and processed using froth flotation to extract copper. Although this example focuses on copper, implementations according to this disclosure can be used to process a wide array of types of initial ore and to target a wide array of minerals/elements in the ore for extraction. For example, in various non-limiting examples, targets can include copper, copper-molybdenum, lead-zinc, lead-zinc-iron, copper-lead-zinc-iron, gold-silver, oxidized copper and lead, nickel, nickel-copper, fluorite, tungsten, lithium, tantalum, tin, or coal. In this example, the as-mined ore included copper, sulfur, iron, antimony, and arsenic, among other components.

Each ore sample A, B, C, and D belonged to the same ore type X, such that the ore samples would typically be processed using the same processing parameters. However, XRD measurements of the ore samples were obtained and processed using PCA (e.g., PCA performed on raw *θ*-2*θ* X-ray diffraction spectra) to associate the ore samples with predefined clusters. It was found that ore samples A and B were grouped into Cluster 1 while ore samples C and D were grouped into Cluster 2. Samples A and C were processed using Reagent A, while samples B and D were processed using Reagent B. It was found that, for Cluster 1, Reagent A increased copper recovery by 3% compared to using Reagent B, while, for Cluster 2, Reagent B increased copper recovery by 6% compared to using Reagent A. Based on this, an association can be established between Cluster 1 and Reagent A, and between Cluster 2 and Reagent B, and future samples sorted into either cluster can be processed accordingly. Conventional flotation process parameter selection - based, for example, on predefined ore types corresponding to mined locations, without a mineral characteristic similarity-based analysis including predefined clusters - would not optimize flotation process parameters based on measurement-derived clusters, and therefore would not realize these copper recovery gains for both Cluster A and Cluster B.

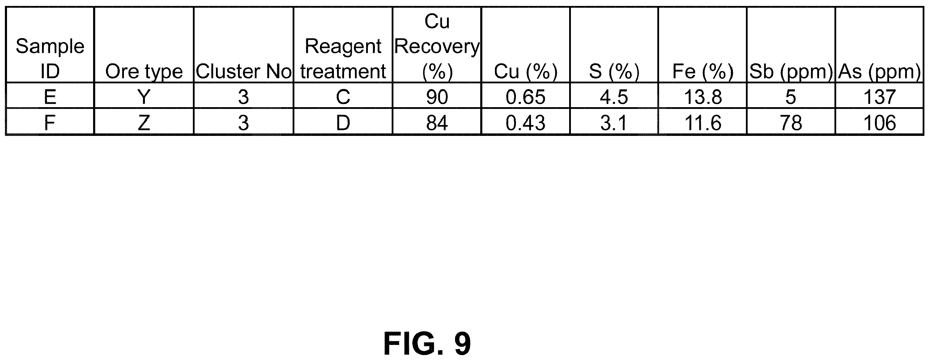

FIG. 9 shows another example of mineral extraction efficiency improvements resulting from cluster-based flotation process parameter determination. Two ore samples E and F were mined at different pits in a mine and, based on their different mined location, classified into ore types Y and Z, respectively. However, using XRD measurements, both ore samples E and F were grouped into Cluster 3, which was associated with Reagent C. Indeed, Sample E was processed using Reagent C and Sample F was processed using Reagent D, and it was observed that copper recovery was increased by 6% using Reagent C compared to Reagent D. Even when different ore types are being processed, cluster-based flotation process parameter determination as described in this disclosure can identify commonalities/similarities between ore from different ore types and indicate corresponding effective process parameters.

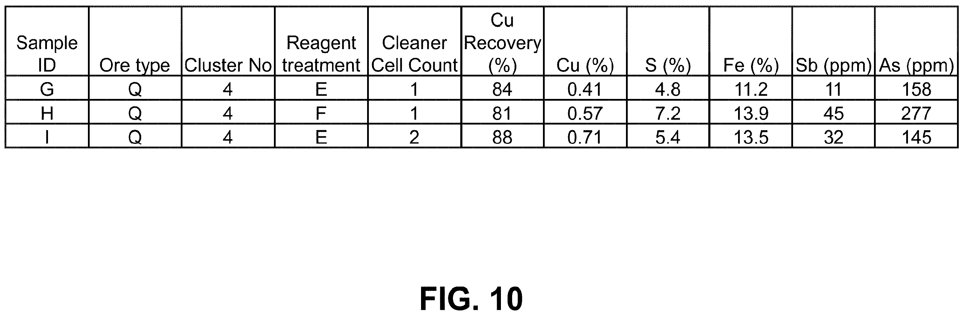

FIG. 10 shows another example of mineral extraction efficiency improvements resulting from cluster-based flotation process parameter determination. Three samples G, H, and I were grouped into a same cluster, Cluster 4, based on XRD measurements. Sample G was processed using Reagent E (associated with Cluster 4) and one cleaner cell (not associated with Cluster 4), for a copper recovery % of 84%. For Sample H, the reagent was changed to Reagent F, which was not associated with Cluster 4, and copper recovery dropped by 3%. For Sample I, Reagent E was used along with two cleaner cells, in accordance with the predetermined associations for Cluster 4, and copper recovery increased by 4% compared to Sample G. Using process parameters in accordance with results of cluster sorting led to higher recovery rates.

In some implementations, taking measurements of flotation feed itself, and basing flotation process parameters on those measurements, provides improvements compared to basing flotation process parameters on other streams such as concentrates (e.g., rougher concentrates or final concentrates). For example, a concentrate obtained from flotation treatment can be analyzed and used to infer the composition of flotation feed that was processed to generate the concentrate, rather than measuring the flotation feed itself. However, first, the concentrate measuring method is a highly delayed method: the concentrate measurement can only provide information about flotation feed that has already undergone at least one round of separation in a flotation cell, e.g., flotation feed that began to be processed multiple hours or more before the concentrate measurements were taken. This increased delay means that derived flotation process parameters may be already out-of-date by the time they are derived, with to-be-processed flotation feed significantly different in composition from the flotation feed that was measured to device the flotation process parameters. When the outdated flotation process parameters are used, efficiency of flotation separation may be reduced. Second, analysis of a concentrate can only provide information on minerals floated in the concentrate, missing information about other minerals (e.g., certain silicates) that may be useful for making a decision on flotation process parameters such as reagents or pH levels.

In addition, XRD measurements on flotation feed itself can be more accurate than measurements made on concentrates, allowing for more accurate flotation process parameter determination.

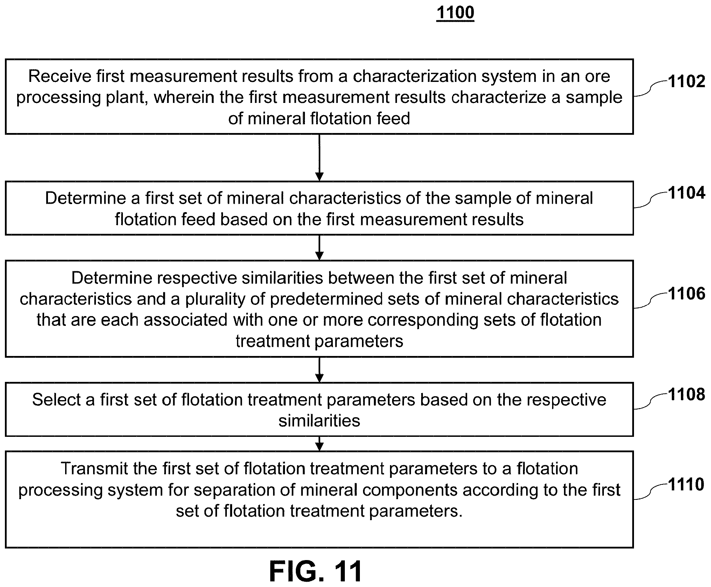

As shown in FIG. 11, in an example method 1100 in accordance with this disclosure, first measurement results are received from a characterization system in an ore processing plant (1102). The first measurement results characterize a sample of mineral flotation feed. A first set of mineral characteristics of the sample of mineral flotation feed are determined based on the first measurement results (1104). Respective similarities are determined between the first set of mineral characteristics and a plurality of predetermined sets of mineral characteristics that are each associated with one or more corresponding sets of flotation treatment parameters (1106). A first set of flotation treatment parameters are selected based on the respective similarities (1108). The first set of flotation treatment parameters are transmitted to a flotation processing system for separation of mineral components according to the first set of flotation treatment parameters (1110).

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well. For example, feedback provided to the user can be any form of sensory feedback (e.g., visual feedback, auditory feedback, or tactile feedback). Input from the user can be received in any form, including acoustic, speech, or tactile input.

The systems and techniques described here can be implemented in a computing system that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing system can include clients and servers. A client and server are generally remote from each other and typically interact through a communication network. The relationship of client and server arises by virtue of computer programs running on the respective computers and having a client-server relationship to each other.

For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Although a few implementations have been described in detail above, other modifications are possible. Logic flows depicted in the figures do not require the particular order shown, or sequential order, to achieve desirable results. In addition, other actions may be provided, or actions may be eliminated, from the described flows or methods, and other components, features, or elements may be added to, selected from one or more member of a group including any two or more of the listed elements, components, or features, or removed from, the described systems or methods. Accordingly, other implementations are within the scope of the following claims.

## Claims

1. A mineral feed flotation method comprising:
receiving first measurement results from a characterization system in an ore processing plant, wherein the first measurement results characterize a sample of mineral flotation feed;
determining a first set of mineral characteristics of the sample of mineral flotation feed based on the first measurement results;
determining respective similarities between the first set of mineral characteristics and a plurality of predetermined sets of mineral characteristics that are each associated with one or more corresponding sets of flotation treatment parameters;
selecting a first set of flotation treatment parameters based on the respective similarities; and
transmitting the first set of flotation treatment parameters to a flotation processing system for separation of mineral components according to the first set of flotation treatment parameters.

2. The mineral feed flotation method of claim 1, wherein the plurality of predetermined sets of mineral characteristics comprise a plurality of clusters of characteristics, said method further comprising:
receiving a plurality of measurement results characterizing a corresponding plurality of first mineral samples;
determining a plurality of first sets of mineral characteristics corresponding to the plurality of measurement results; and
clustering the plurality of first sets of mineral characteristics into the plurality of clusters of characteristics; and optionally further comprising
performing one or more measurement processes on the plurality of first mineral samples, to obtain the plurality of measurement results;
wherein determining the plurality of first sets of mineral characteristics comprises performing principal component analysis or linear discriminant analysis on the plurality of measurement results; and
wherein clustering the plurality of first sets of mineral characteristics comprises passing the plurality of first sets of mineral characteristics through a decision tree, wherein a rule in the decision tree comprises a decision based on a concentration of a first mineral component in the sample.

3. The mineral feed flotation method of claim 2, wherein a first cluster of the plurality of clusters comprises a first set of mineral characteristics corresponding to a first ore type and a second set of mineral characteristics corresponding to a second ore type that is different from the first ore type; or
wherein a first cluster of the plurality of clusters comprises a first set of mineral characteristics corresponding to a first ore type, and wherein a second cluster of the plurality of clusters comprises a second set of mineral characteristics corresponding to the first ore type; or
wherein determining the respective similarities comprises determining that the first set of mineral characteristics falls within a first cluster of characteristics of the plurality of clusters of characteristics, and wherein the first set of flotation treatment parameters is a set of flotation treatment parameters corresponding to the first cluster of characteristics; or
wherein determining the respective similarities comprises determining that the first set of mineral characteristics falls outside the plurality of clusters of characteristics, and wherein determining the first set of flotation treatment parameters comprises determining a combination of at least two sets of flotation treatment parameters corresponding to at least two clusters of characteristics of the plurality of clusters of characteristics; or
wherein determining the first set of mineral characteristics based on the first measurement results comprises at least one of determining principal components of the first measurement results or performing linear discriminant analysis on the first measurement results.

4. The mineral feed flotation method of any one of claims 1 to 3, wherein determining the first set of mineral characteristics comprises mapping the first measurement results to a parameter space of the plurality of predetermined sets of mineral characteristics.

5. The mineral feed flotation method of any one of claims 1 to 4, wherein the first measurement results characterize the sample of mineral flotation feed when the sample of mineral flotation feed is in a slurry form.

6. The mineral feed flotation method of any one of claims 1 to 5, wherein the first sample of mineral flotation feed comprises a ball mill cyclone overflow; or
wherein the first sample of mineral flotation feed comprises at least one of a semi-autogenous mill feed, a semi-autogenous mill output, or a ball mill cyclone inlet feed; or
wherein the first sample of mineral flotation feed has not been subject to separation in a flotation cell.

7. The mineral feed flotation method of any one of claims 1 to 6, wherein the first set of flotation treatment parameters comprises at least one of: a reagent composition, a collector type, a collector dosage, a collector addition point, a frother type, a frother dosage, a frother addition point, a modifier type, a modifier dose, a modifier addition point, a slurry pH, a residence time, a solids density, or a flotation process flow.

8. The mineral feed flotation method of any one of claims 1 to 7, wherein the sample of mineral flotation feed comprises a combination of multiple ore types.

9. The mineral feed flotation method of any one of claims 1 to 8, wherein the first measurement results comprise at least one of an X-ray diffraction pattern, an X-ray fluorescence spectrum, a near-infrared spectroscopy spectrum, or magnetic resonance intensity at a given frequency.

10. The mineral feed flotation method of any one of claims 1 to 9, comprising performing one or more measurement processes on the sample of mineral flotation feed, to obtain the first measurement results.

11. The mineral feed flotation method of any one of claims 1 to 10, comprising separating the mineral components according to the first set of flotation treatment parameters.

12. The mineral feed flotation method of any one of claims 1 to 11, comprising:
determining a second plurality of predetermined sets of mineral characteristics by re-clustering the plurality of predetermined sets of mineral characteristics with the first set of mineral characteristics.

13. The mineral feed flotation method of claim 12, comprising:
obtaining an additional set of mineral characteristics of an additional sample of mineral flotation feed;
determining respective additional similarities between the additional set of mineral characteristics and the second plurality of predetermined sets of mineral characteristics;
selecting an additional set of flotation treatment parameters based on the respective additional similarities; and
transmitting the additional set of flotation treatment parameters to the flotation processing system for separation of mineral components according to the additional set of flotation treatment parameters.

14. A non-transitory, computer-readable storage medium storing instructions that, when executed by one or more processors, cause the one or more processors to perform operations comprising:
receiving first measurement results from a characterization system in an ore processing plant, wherein the first measurement results characterize a sample of mineral flotation feed;
determining a first set of mineral characteristics of the sample of mineral flotation feed based on the first measurement results;
determining respective similarities between the first set of mineral characteristics and a plurality of predetermined sets of mineral characteristics that are each associated with one or more corresponding sets of flotation treatment parameters;
selecting a first set of flotation treatment parameters based on the respective similarities; and
transmitting the first set of flotation treatment parameters to a flotation processing system for separation of mineral components according to the first set of flotation treatment parameters.

15. A system comprising:
one or more processors; and
a storage medium storing instructions that, when executed by the one or more processors, cause the one or more processors to perform operations comprising:
receiving first measurement results from a characterization system in an ore processing plant, wherein the first measurement results characterize a sample of mineral flotation feed;
determining a first set of mineral characteristics of the sample of mineral flotation feed based on the first measurement results;
determining respective similarities between the first set of mineral characteristics and a plurality of predetermined sets of mineral characteristics that are each associated with one or more corresponding sets of flotation treatment parameters;
selecting a first set of flotation treatment parameters based on the respective similarities; and
transmitting the first set of flotation treatment parameters to a flotation processing system for separation of mineral components according to the first set of flotation treatment parameters.
